# EUROPEAN PATENT SPECIFICATION

(11) **EP 3 381 005 B1**
(45) Date of publication and mention of the grant of the patent: **15.10.2025**
(21) Application number: 16869181.4
(22) Date of filing: 22.11.2016
(51) Int. Cl.: G06Q 30/0601, G06Q 20/32, G06Q 20/38, G06Q 20/40, G06Q 20/12

(54) **SYSTEM AND METHOD OF PROVIDING SUPPLEMENTAL INFORMATION IN A TRANSACTION**
SYSTEM UND VERFAHREN ZUR BEREITSTELLUNG VON ZUSÄTZLICHEN INFORMATIONEN IN EINER TRANSAKTION
SYSTÈME ET PROCÉDÉ DE FOURNITURE D'INFORMATIONS SUPPLÉMENTAIRES DANS UNE TRANSACTION

(30) Priority: 23.11.2015 IN 6294CH2015
(43) Date of publication of application: 03.10.2018
(73) Proprietor: Visa International Service Association, San Francisco, CA 94128-8999 (US)
(72) Inventor: RAJURKAR, Pankaj, Singapore 068895 (SG); KULPATI, Ashish, Singapore 448908 (SG); NAYAK, Koni Uttam, Mumbai 400063 (IN); HARIHARAN, Gurumoorthy, Mumbai 400063 (IN)
(74) Representative: EIP
(86) International application number: PCT/US2016/063373
(87) International publication number: WO 2017/091594

(56) References cited:
- WO-A1-2015/039025
- KR-A- 20060 097 187
- KR-A- 20080 021 436
- KR-A- 20140 087 081
- US-A1- 2013 254 115
- US-A1- 2014 101 036
- US-A1- 2014 236 767
- ESPAGO: "espago masterpass v6", YOU TUBE, 2 April 2015 (2015-04-02), pages 1, XP054978555, Retrieved from the Internet <URL:https://www.youtube.com/watch?v=C0Mx3mXPMgA> [retrieved on 20180802]

## Description

### BACKGROUND OF THE INVENTION

The use of mobile devices such as mobile phones in conducting financial transactions is becoming widespread. In some cases, mobile phones enable consumers to scan graphical codes, such as quick response barcodes, to initiate payments in favour of a recipient displaying the graphical code.

While these techniques enable consumers to quickly initiate a payment in favour of a recipient, in many transaction types, additional information will be required by the recipient. For example, in the case of an electronic commerce (e-commerce) transaction, the recipient will typically require a shipping address and possibly contact information of the consumer to enable the recipient to ship the purchased product to the consumer. However, requiring the user to provide such further information may slow down the process of transacting and may in turn increase the difficulty experienced by consumers in transacting. In some embodiments, a recipient may be a merchant.

It may further be troublesome for recipients to receive a consumer's shipping address from one source and confirmation of payment from another source. Receiving information from disparate sources may increase back-end processing which the recipient needs to perform, for example, in tying the shipping address of the consumer received from one source with the payment confirmation received from another source (such as the recipient's financial institution).

US 2013/0254115 A1 discloses a converged cross-platform electronic wallet system.

Embodiments of the invention address these and other problems, individually and collectively.

### BRIEF SUMMARY OF THE INVENTION

Embodiments of the disclosure are directed to a system in which supplemental information related to a first entity of a transaction is provided to a second entity of the transaction. In some embodiments, the transaction may be a push transaction. A push transaction may be initiated by a user of a mobile device. The mobile device may convey transaction information (including an indication of required supplemental information) to an authorization server associated with the mobile device. Upon receiving the transaction information, the authorization server may determine whether the transaction is approved, query the supplemental information to be provided, append the supplemental information to an authorization response message, and transmit the authorization response message to a transport computer associated with the transaction. The supplemental information may then be used by the transport computer or another entity party to the transaction to complete the transaction.

Aspects of the invention are defined by the appended independent claims.

An even further feature provides for the permission indication to include the requested supplemental information.

A further feature provides for the method to include retrieving the supplemental information from a data record associated with the user.

A still further feature provides for the method to include receiving a transaction response message confirming or denying the transaction.

Yet further features provide for transmitting the transaction request message for receipt by the transport computer to include transmitting the transaction request message to the transport computer via a processing network, and for the account identifier of the recipient to include routing information usable by the processing network in routing the transaction request message to the transport computer. The processing network may be an interoperable processing network.

In accordance with a second aspect of the invention, there is provided a server apparatus comprising one or more processors, and a memory including instructions that, when executed by the one or more processors, cause the server apparatus to: receive, from a mobile device, an indication of an account identifier, an access credential, and an indication of supplemental information, determine whether the transaction is authorized based on the access credential, identify, based at least in part on the access credential, values for the indicated supplemental information, upon determining that the transaction is authorized, generate an authorization response that includes the identified values, and transmit the generated authorization response to a recipient, such that the values for the indicated supplemental information are used to contact a user.

A further feature provides for the tag to be one of: a radio frequency beacon, a near sound communication beacon, or graphical code (e.g., a machine readable code).

Still further features provide for the supplemental information to include one or more of the group of: a shipping address, an email address, and a phone number, and for the supplemental information flag to indicate that one or more of a shipping address, an email address, and a phone number of the user is requested by the recipient.

A yet further feature provides for prompting the user for permission to share the requested supplemental information with the recipient to include displaying the supplemental information which will be shared with the recipient.

A still further feature provides for prompting the user for permission to share the requested supplemental information with the recipient to include providing the user with an option to edit the supplemental information which will be shared with the recipient.

A yet further feature provides for prompting the user for permission to share the requested supplemental information with the recipient to include providing the user with an option to select supplemental information of a contact of the user which will be shared with the recipient.

In accordance with a third aspect of the invention, there is provided a system for routing supplemental information related to a transaction to a recipient, comprising: a user messaging component configured to receive, from a mobile device associated with a user, a transaction message comprising at least an amount associated with a transaction, an account identifier associated with the recipient, an indication of supplemental information requested by the recipient, and a permission indication indicating the user's approval or denial with respect to providing the supplemental information requested by the recipient; a generating component configured to generate an authorization response message comprising the amount and an approval of the transaction; a fulfilment component configured to, if the permission indication indicates that the requested supplemental information may be shared with the recipient, determine the requested supplemental information; and a processing network component configured to transmit the authorization response message and the determined supplemental information to a transport computer associated with the account identifier.

A further feature provides for the generating component to be for, if the permission indication indicates that the requested supplemental information may not be shared with the recipient, generating a transaction request message including the amount and the account identifier of the recipient.

Still further features provide for the transaction to be a push transaction and for the transaction request message to be an original credit transaction request message.

A yet further feature provides for the supplemental information to include one or more of the group of: a shipping address, an email address, and a phone number.

An even further feature provides for the permission indication to include the requested supplemental information.

A still further feature provides for the system to include a retrieving component for retrieving the supplemental information from a data record associated with the user.

A further feature provides for the processing network messaging component further to be for receiving a transaction response message confirming or denying the transaction.

A still further feature provides for the processing network messaging component to transmit the transaction request message to the transport computer via a processing network, and for the account identifier of the recipient to include routing information usable by the processing network in routing the transaction request message to the transport computer. The processing network may be an interoperable processing network.

In accordance with a fourth aspect of the invention, there is provided a system for conducting a transaction in which funds are transferred from a user to a recipient, the system including a mobile device of the user, comprising: an obtaining component for obtaining, from a tag, an account identifier of the recipient and a supplemental information flag indicating that supplemental information of the user is requested by the recipient; a prompting component for prompting the user for permission to share the requested supplemental information with the recipient; an input component for receiving the user's approval or denial in respect of sharing the requested supplemental information with the recipient; a generating component for generating a transaction message including an amount associated with the transfer of funds, the account identifier of the recipient and a permission indication indicating the user's approval or denial in respect of sharing the requested supplemental information with the recipient; and, a transmitting component for transmitting the transaction message to an authorization server associated with the user for processing the transaction and conditional forwarding of the requested supplemental information to the recipient.

A further feature provides for the tag to be one of: a radio frequency beacon, a near sound communication beacon, or graphical code.

A still further feature provides for the supplemental information to include one or more of the group of: a shipping address, an email address, and a phone number, and for the supplemental information flag to indicate that one or more of a shipping address, an email address, and a phone number of the user is requested by the recipient.

A yet further feature provides for the prompting component to display the supplemental information which will be shared with the recipient.

A further feature provides for the prompting component to provide the user with an option to edit the supplemental information which will be shared with the recipient.

A still further feature provides for the prompting component to provide the user with an option to select supplemental information of a contact of the user which will be shared with the recipient.

In accordance with a fifth aspect of the invention, there is provided a computer program product for conducting a transaction in which funds are transferred from a user to a recipient, the computer program product comprising a computer-readable medium having stored computer-readable program code for performing the steps of: receiving, from a mobile device of the user, a transaction message including an amount associated with the transfer of funds, an account identifier of the recipient, and a permission indication indicating the user's approval or denial in respect of sharing with the recipient supplemental information requested by the recipient; if the permission indication indicates that the requested supplemental information may be shared with the recipient, generating a transaction request message including the amount, the account identifier of the recipient and the requested supplemental information; and, transmitting the transaction request message for receipt by a transport computer associated with the recipient for processing the transaction and conditional forwarding of the requested supplemental information to the recipient.

In accordance with a sixth aspect of the invention, there is provided a computer program product for conducting a transaction in which funds are transferred from a user to a recipient, the computer program product comprising a computer-readable medium having stored computer-readable program code for performing the steps of: obtaining, from a tag, an account identifier of the recipient and a supplemental information flag indicating that supplemental information of the user is requested by the recipient; prompting the user for permission to share the requested supplemental information with the recipient; receiving the user's approval or denial in respect of sharing the requested supplemental information with the recipient; generating a transaction message including an amount associated with the transfer of funds, the account identifier of the recipient and a permission indication indicating the user's approval or denial in respect of sharing the requested supplemental information with the recipient; and, transmitting the transaction message to an authorization server associated with the user for processing the transaction and conditional forwarding of the requested supplemental information of the recipient.

Further features provide for the computer-readable medium to be a non-transitory computer-readable medium and for the computer-readable program to be executable by a processing unit.

### BRIEF DESCRIPTION OF THE DRAWINGS

The invention will now be described, by way of example only, with reference to the accompanying representations in which:
Figure 1 is a schematic diagram which illustrates an exemplary system for conducting a transaction;
Figure 2 is a block diagram which illustrates components of the system illustrated in Figure 1;
Figure 3 is a swim-lane flow diagram which illustrates an exemplary method for conducting a transaction;
Figure 4 is a schematic diagram which illustrates an exemplary scenario of the described system and method in use from the perspective of a user;
Figure 5 illustrates an example process flow that may be implemented in accordance with some embodiments of the disclosure;
Figure 6 illustrates an example of a computing device in which various aspects of the disclosure may be implemented;
Figure 7 shows a block diagram of a mobile device that may be used in embodiments of the disclosure; and
Figure 8 depicts an example flow diagram for providing supplemental data for a transaction in accordance with embodiments of the disclosure.

### DETAILED DESCRIPTION OF THE INVENTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

Prior to discussing the details of some embodiments of the present invention, description of some terms may be helpful in understanding the various embodiments.

An "access credential" may be any data or portion of data used to gain access to a particular resource. In some embodiments, an access credential may be a login and/or password for a user account. In some embodiments, an access credential may comprise a payment device, such as a credit card number. In some embodiments, an access credential may include account information or a token associated with the account information, a cryptogram, a digital certificate, etc. A mobile device may store one or more access credentials associated with each mobile application. In some embodiments, an access credential stored in association with a mobile application may be used to conduct transactions on behalf of a user of the mobile application. In some embodiments, the mobile device may store a single access credential that may be used in each transaction initiated by the mobile device.

An "authorization server" may be any computing device or plurality of computing devices configured to authorize transactions. An authorization server may be configured to receive an authorization request message for a transaction, authorize or decline the transaction, and provide an authorization response message based on whether the transaction has been authorized or declined. An authorization server may determine whether to authorize or decline the transaction based on any number of factors associated with the transaction.

A "mobile device" may be any type of electronic device which is transportable. For example, a mobile device may comprise, but is not limited to, a mobile phone, a smart phone, a supplemental digital assistant (PDA), a laptop computer, a tablet PC, etc. Additionally or alternatively, the mobile device may be any type of wearable technology device, such as a watch, earpiece, glasses, etc. In some embodiments, a mobile device may also be an automobile with remote communication capabilities.

A "processing network" may be any network configured to route and/or process transaction information. A processing network may comprise any one or a combination of many different types of networks, such as cable networks, the Internet, wireless networks, cellular networks, and other private and/or public networks. In addition, the processing network may comprise multiple different networks. In some embodiments, the processing network may be an electronic processing network (e.g., VisaNet).

A "push transaction" is any transaction initiated by a consumer that is pushed to a recipient. This is in contrast to a transaction for which authorization is initiated by a recipient. For example, a push transaction may comprise a transaction initiated on a user's mobile device that is conveyed to an authorization server without first going through a transport computer associated with the recipient in a transaction. In this example, the authorization server may, upon determining that the transaction is approved, provide a message to the transport computer with an indication of the transaction to be completed and authorization for the transaction.

A "server computer" may include a powerful computer or cluster of computers. For example, the server computer can be a large mainframe, a minicomputer cluster, or a group of servers functioning as a unit. In one example, the server computer may be a database server coupled to a Web server. The server computer may be coupled to a database and may include any hardware, software, other logic, or combination of the preceding for servicing the requests from one or more client computers. The server computer may comprise one or more computational apparatuses and may use any of a variety of computing structures, arrangements, and compilations for servicing the requests from one or more client computers.

A "transaction" may be any interaction or exchange between two or more parties. For example, a transaction may include a first entity requesting resources from a second entity. In this example, the transaction is completed when the resources are either provided to the first entity or the transaction is declined.

A "transport computer" may be any computing device or plurality of computing devices configured to process transaction information for a recipient. In some embodiments, the transport computer may be configured to process transaction information received from a terminal device and generate an authorization request message to be transmitted to an authorization server. In some embodiments, a transport computer may also be an authorization server. For example, an authorization server may be configured to receive transaction information from the terminal device and authorize or decline the transaction. In some embodiments, the transport computer may be operated by a third party entity (e.g., an entity unaffiliated with the authorization server and/or the recipient). In some embodiments, the transport computer may be configured to receive information from an authorization server in response to push transactions. The transport computer may be further configured to relay any received supplemental information to a recipient.

Details of some embodiments of the present invention will now be described.

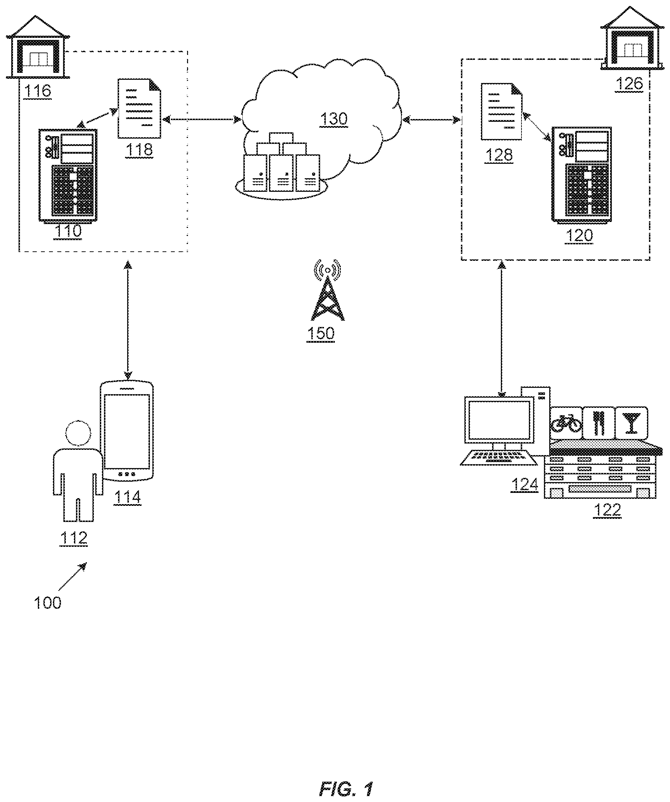

Figure 1 is a schematic diagram which illustrates an exemplary system (100) for conducting a transaction. The system (100) includes an authorization server (110) associated with a user (112) and a transport computer (120) associated with a recipient (122). The user and recipient (112, 122) may each have a mobile device (114, 124) respectively associated therewith. The user's mobile device (114) may be a mobile device, such as a mobile phone or wearable computing device.

The system (100) enables the user (112) to initiate payments in favour of the recipient (122) by causing transaction request messages, including an account identifier of the recipient (122), to be generated and transmitted from the authorization server (110) to the transport computer (120) via a processing network (130). The account identifier of the recipient is thus usable by the user to push payments to the recipient. In this manner, transactions described herein may be referred to as push transactions.

The system (100) may be utilized for person-to-person payments or for consumer-to-recipient payments in which the recipient (a recipient) displays its account identifier to the user (a consumer) to enable the user to initiate payments in favour of the recipient. In other scenarios, the user may be donor wishing to make a donation to the recipient, being a charitable organisation displaying its account identifier on, for example a poster or digital display.

In the embodiments described herein, the recipient may provide its account identifier to the user in a tag which includes a supplemental information flag indicating that certain supplemental information of the user is requested by the recipient. Embodiments described herein anticipate supplemental information which may be requested by the recipient including one or more of the group of: a shipping address, an address of a contact other than the user, contact information of the user such as an email address and/or a phone number, know-your-customer (KYC) information, an identity number, a social security number and the like. Accordingly, and depending on whether the user grants permission for the supplemental information requested by the recipient to be shared with the recipient, the transaction request message may include the requested supplemental information of the user (112) which will be shared with the recipient.

The authorization server and transport computers (110, 120) respectively may be any appropriate server computers, server computer clusters, distributed server computers, cloud-based server computers and the like. Each of the server computers (110, 120) may include a processor and a non-transitory computer readable medium comprising code executable by the processor to perform functions, such as generating messages, electronically receiving and transmitting messages or data, parsing messages or data, and the like. "The server computers (110, 120) may be configured to transmit and receive financial system transaction messages (such as ISO 8583 messages), debit and credit financial accounts, transmit messages to and receive messages from the mobile devices (114, 124) respectively and the like.

The authorization server (110) may be maintained or operated by financial institution (116) controlling a financial account (118) of the user. The financial account of the user may be associated with an account identifier. Similarly, the transport computer (120) may be maintained or operated by another financial institution (126) controlling a financial account (128) of the recipient (112). The financial account (128) of the recipient (122) may be associated with an account identifier.

The account identifiers of the user and the recipient may include routing information usable by the processing network (130) in routing financial system transaction response messages between the server computers (110, 120). The routing information may be a bank identification number (BIN) associated with the respective financial institution (116, 126) and which is usable by the processing network (130) in identifying the appropriate financial institution (116, 126) to which the financial system response messages should be transmitted.

The processing network (130) may include data processing subsystems, networks, server computers and operations used to support and deliver authorization services, exception file services, and clearing and settlement services. The processing network (130) may be any suitable network able to transmit and receive financial system transaction messages (e.g., ISO 8583 messages), and process original credit and debit card transactions. Payment processing systems such as VisaNet^{™} are able to process credit card transactions, debit card transactions, and other types of commercial transactions, including virtual card and mobile wallet transactions. The processing network (130) may be an interoperable processing network.

The mobile device (114) may be any appropriate electronic device capable of communicating over a communication network (150). The mobile device (114) may be one of the group of: a mobile phone, a smart phone, a wearable computing device, tablet computing device, a supplemental digital assistant, a laptop or desktop computer or the like. The mobile device (114) may have a software application resident therein and installed thereon which may enable the mobile device (114) to transmit data messages to and receive data messages from the authorization server (110). In other embodiments, the mobile device (114) may exchange data messages with the authorization server (110) using Unstructured Supplementary Service Data (USSD) sessions or Short Messaging Service (SMS) messages via the communication network (150).

The mobile device (124) may be any appropriate electronic device capable of communicating over the communication network (150). Depending on the application, the recipient mobile device (124) may be a mobile phone, a point of sales device, an electronic transaction server or the like. The recipient's mobile device (124) may also have an appropriate software application resident therein and installed thereon which may enable the mobile device (124) to transmit data messages to and receive data messages from the transport computer (120).

By enabling the mobile device (114) to exchange messages with the authorization server (110), the user (112) may be able to use the mobile device (114) to transact against the financial account (118) of the user controlled by the user's financial institution (116). The user may be able to initiate transactions in favour of the recipient's financial account (128) by using the user's mobile device (114) to generate and transmit a transaction message, including the account identifier of the recipient and an amount associated with the transfer of funds, to the authorization server (110). When initiating a transaction in favour of the recipient, the user may be able to indicate whether he or she permits supplemental information, such as a shipping address or contact information, to be shared with the recipient.

In response to receiving the transaction message requesting the authorization server (110) to initiate a transfer of funds in favour of the recipient's financial account (128), the authorization server (110) debits the financial account of the user and transmits a transaction request message, including the account identifier of the recipient and the amount, to the transport computer (120). If the user has indicated that supplemental information may be shared with the recipient, the authorization server (110) may include this supplemental information in the transaction request message.

A transaction request message may be any suitable financial system transaction message transmitted from the authorization server (110) to the transport computer (120) through the processing network (130). A transaction request message may be in the standard ISO 8583 messaging format, or in any other suitable financial system transaction messaging format. Suitable messages may be in an 0200 message format. The transaction request message may be an Original Credit Transaction (OCT) type message.

An OCT is typically a clearing and settlement credit transaction designed for use in business applications such as a business money transfer or business-to-consumer repayments. A special indicator identifies an OCT to the recipient of the message. OCT messages may also include an Electronic Commerce Indicator (ECI) to indicate an Internet OCTs (if appropriate). Representational State Transfer Extensible Markup Language (REST-XML), REST-JavaScript Object Notation (REST-JSON), and REST-Name-Value-Pairs (REST-NVP) templates may be used for the OCT request messages. OCT request messages described herein may include an amount associated with the transfer of funds, an account identifier of the recipient, an account identifier of a user, supplemental information of the user, a message type indicator, a transaction identifier, currency information and any other appropriate information.

The transaction request message may thus be routed from the processing network (130) to the transport computer (120). The transport computer (120) credits the recipient's financial account (128) and transmits a transaction response message, either confirming or denying the transaction, to the authorization server (110) via the processing network (130). A transaction response message may be any suitable message transmitted from the transport computer (120) to the authorization server (110) through the processing network (130), in response to the transaction request message. A transaction response message may in the standard ISO 8583 messaging format, or in any other suitable financial system transaction messaging format. The transaction response message may include an indication that the transfer of funds was approved or not approved.

The transport computer (120) may transmit a payment confirmation message to the recipient indicating the amount paid by the user and including the supplemental information of the user requested by the recipient. The recipient may then be able to use the supplemental information to communicate with the user, for example by shipping a product purchased by the user to the address included in the transaction request message or by acknowledging a donation received from the user.

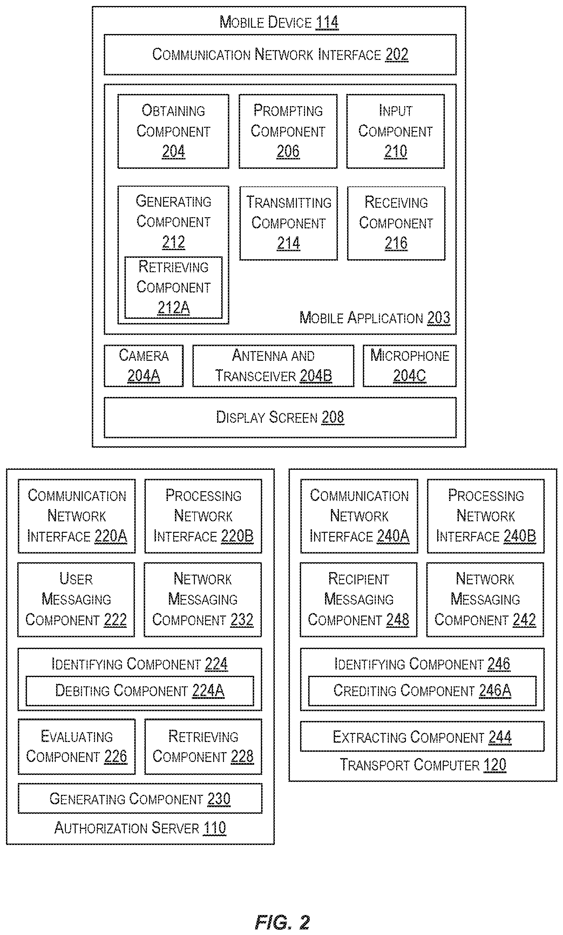

Turning now to Figure 2, components of the user's mobile device (114), the authorization server (110) and the transport computer (120) are illustrated.

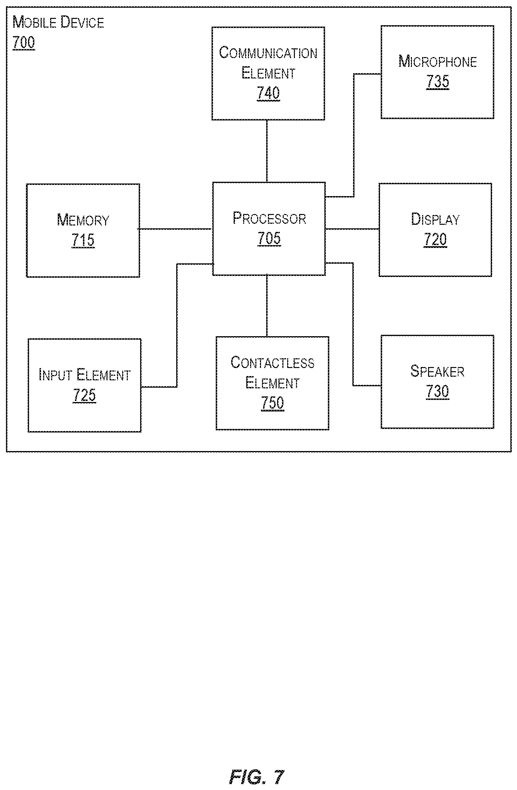

The mobile device (114) of the user may include a communication network interface (202) arranged to enable the mobile device (114) to communicate with the authorization server (110) over the communication network (150). Further details of an embodiment of a mobile device are provided with reference to Figure 7 and described below.

The mobile device (114) may include a processor for executing the functions of the described components which may be software units executing on the mobile device (114) either being resident thereon or provided remotely. Instructions may be provided to the processor to carry out the functionality of the described components.

The mobile device (114) may host a banking or payment functionality provided by a mobile application (203) which may include secure transaction capabilities. A mobile application (203) may be provided by a financial institution or processing network and may be resident on the mobile device (114) or may be provided as a remotely based service application.

The mobile application (203) may include an obtaining component (204) which is configured to obtain information from a tag provided by the recipient. The obtaining component (204) may include access to hardware components of the mobile device (114) including one or more of the group of: a camera (204A) for capturing information from a tag in the form of a machine readable code (e.g., quick response (QR) code or other suitable two-dimensional barcode); an antenna and transceiver (204B) for receiving information from a tag in the form of a radio frequency beacon such as a Near Field Communication (NFC), Radio Frequency Identification (RFID), Bluetooth^{™} Low Energy (BLE) beacon or the like; and a microphone (204C) for receiving information from a tag in the form of a near sound communication beacon. The information obtained from the tag may include one or more of the group of: an account identifier of the recipient; a supplemental information flag indicating that supplemental information of the user is requested by the recipient; an amount (e.g. $200); information about the recipient such as a name of the recipient, an address of the recipient, a recipient category code (where applicable) of the recipient and the like.

The mobile application (203) may also include a prompting component (206) arranged to prompt the user operating the mobile device (114) for permission to share the requested supplemental information with the recipient. The prompting component (206) may prompt the user via a message displayed on a display screen (208) of the mobile device (114). The prompting component (206) may also display the supplemental information which will be shared with the recipient together with the prompt. In some embodiments, the prompting component (206) may be configured to provide the user with an option to edit the supplemental information which will be shared with the recipient. It is also anticipated that the prompting component (206) may be arranged to provide the user with an option to select supplemental information of a contact of the user which will be shared with the recipient, for example, where the user is purchasing a gift for one of the user's contacts.

The mobile application (203) may further include an input component (210) which is arranged to receive the user's approval or denial in respect of sharing the requested supplemental information with the recipient. The input component (210) may further be configured to receive input by the user editing the supplemental information to be shared with the user or alternatively the user's input as to a contact whose supplemental information should be shared with the recipient. In some embodiments, the input component (210) is further configured to receive an amount input by the user in respect of the transfer of funds (e.g. where this is not included in the information received from the tag).

The mobile application (203) may include a generating component (212) configured to generate a transaction message. The generating component (212) may be arranged to include one or more of the group of: the amount associated with the transfer of funds; the account identifier of the recipient obtained from the tag; the account identifier of the user; and a permission indication indicating the user's approval or denial in respect of sharing the requested supplemental information with the recipient in the transaction message. In some embodiments, the generating component (212) includes a retrieving component (212A) for retrieving the requested supplemental information from a digital memory of the mobile device and including the retrieved supplemental information with the permission indication in the transaction message. In other embodiments, the supplemental information may be stored at the authorization server (110) for retrieval thereat.

The mobile application (203) may also include a transmitting component (214) configured to transmit the generated transaction message to the authorization server (110) associated with the user for processing the transaction and conditional forwarding of the requested supplemental information to the recipient. The mobile device (114) may further include a receiving component (216) for receiving a transaction confirmation or denial message confirming or denying the transaction. The transmitting component (214) and receiving component (216) may use the communication network interface (202) to transmit the transaction message to and receive the transaction confirmation or denial message from the authorization server (110) via the communication network (150).

The authorization server (1101) may include at least one processor, a hardware module, or a circuit for executing the functions of the described components which may be software units executing on the at least one processor.

The authorization server (110) may include a communication network interface (220A) arranged to enable the authorization server (110) to communicate with the mobile device (114) of the user over the communication network (150). The authorization server (110) may include a processing network interface (220B) configured to enable the authorization server (110) to communicate with the processing network (130) and in turn the transport computer (120). The processing network interface (220B) may, for example be configured to parse messages into ISO 8583 formatted messages for transmission over the processing network (130) as well as performing handshaking and other networking operations.

The authorization server (110) may also include a user messaging component (222) which is configured to receive the transaction message from the mobile device (114) of the user. The user messaging component (222) may receive the transaction message via the communication network interface (220A) of the authorization server (110).

The authorization server (110) may also include an identifying component (224) arranged to identify a financial account and/or a data record associated with the user. The identifying component (224) may use the account identifier of the user included in the transaction message to identify the financial account and/or the data record. The identifying component (224) may also include a debiting component (224A) for debiting the financial account with the amount associated with the transfer of funds.

The authorization server (110) may include an evaluating component (226) which is arranged to evaluate the permission indication included in the transaction message to determine whether the user has granted or denied permission to the authorization server (110) to share supplemental information requested by the recipient with the recipient.

In some embodiments, the authorization server (110) includes a retrieving component (228) configured to retrieve the requested supplemental information, in respect of which the user has granted permission for sharing with the recipient, from the data record associated with the user. In other embodiments, the supplemental information is included with the permission indication in the transaction message.

The authorization server (110) may include a generating component (230) arranged to, if the permission indication indicates that the requested supplemental information may be shared with the recipient, generate a transaction request message. The generating component (230) may include one or more of the amount; the account identifier of the recipient; the account identifier of the user; the requested supplemental information in respect of which the user has granted permission for sharing with the recipient; and optionally additional information in the transaction request message. The transaction request message generated by the generating component (230) may be an OCT request message.

If the permission indication indicates that the requested supplemental information may not be shared with the recipient, the generating component (230) may be configured to generate a transaction request message including the amount and the account identifier of the recipient and optionally other information. In other embodiments, the transaction may fail if the permission indication indicates that the requested supplemental information may not be shared with the recipient.

The authorization server (110) may also include a processing network messaging component (232) which is arranged to transmit the transaction request message for receipt by the transport computer (120) associated with the recipient. The processing network messaging component (232) may also be arranged to receive a transaction response message from the transport computer either confirming or denying the transaction. The processing network messaging component (232) may send and receive transaction request and response messages to and from the processing network using the processing network interface (220B).

The transport computer (120) may include at least one processor, a hardware module, or a circuit for executing the functions of the described components which may be software units executing on the at least one processor.

The transport computer (120) may include a communication network interface (240A) arranged to enable the transport computer (120) to communicate with the mobile device (124) of the recipient over the communication network (150). The transport computer (120) may include a processing network interface (240B) configured to enable the transport computer (120) to communicate with the processing network (130) and in turn the authorization server (110).

The transport computer (120) may include a processing network messaging component (242) for receiving transaction request messages from the authorization server (110) via the processing network (130). The processing network messaging component (242) may also be arranged to transmit transaction response messages to the issuing server computer via the processing network either confirming or denying the transaction. The processing network messaging component (242) may send and receive transaction response and request messages to and from the processing network using the processing network interface (240B).

The transport computer (120) may also include an extracting component (244) configured to extract the amount associated with the transfer of funds, the account identifier of the recipient and the supplemental information from the transaction request message.

The transport computer (120) may also include an identifying component (246) for identifying the financial account of the recipient associated with the recipient account identifier and a crediting component (246A) for crediting the financial account of the recipient with the amount.

The transport computer (120) may further include a recipient messaging component (248) arranged to transmit a confirmation or denial message to the mobile device (124) of the recipient either confirming or denying the transaction. The payment confirmation message may include the amount in respect of the transfer of funds as well as the supplemental information which was requested by the recipient.

It should be appreciated that the authorization server (110) may be configured to act as and perform the operations of a transport computer and vice versa. Thus embodiments of the described system anticipate an authorization server including the components of and being able to perform the functions and operations of a transport computer and similarly a transport computer including the components of and being able to perform the functions and operations of an authorization server. For example, a server computer may be a transport computer to one entity and an authorization server to another entity. In some cases, depending on whether the entity is a user or a recipient in a particular transaction, the server computer may act as and perform the operations and functions of a transport computer or an authorization server as may be required.

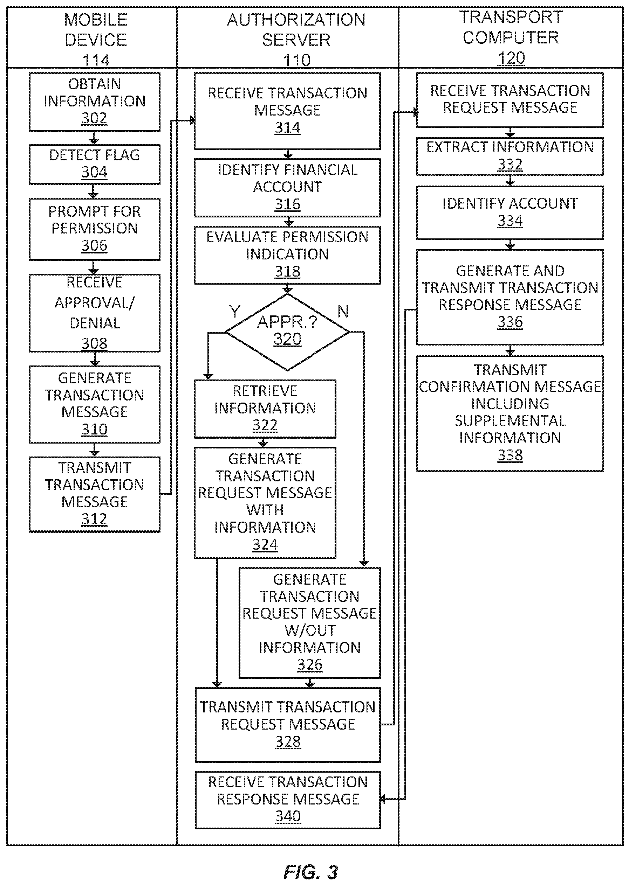

An exemplary method (300) for conducting a transaction using the system described above is illustrated in Figure 3.

The method may be implemented in a number of transaction scenarios. For example, in one scenario, a user may be a consumer who notices an posting which advertises a product which the recipient (a recipient) is selling. The posting may be a digital display and may include a tag in which the account identifier of the user, an amount which must be paid for the product, as well as a supplemental information flag indicating that certain supplemental information of the user will be required by the recipient. The supplemental information flag may, for example, indicate that the recipient will require a shipping address of the user so that the product can be shipped to the user.

In another exemplary scenario, the recipient may be a charity appealing to donors to make donations. The recipient may place postings including a tag in public spaces. The tag may include the account identifier of the user, a suggested donation amount, as well as a supplemental information flag indicating that certain supplemental information (such as an email address of the user) will be required by the recipient.

Upon noticing the posting and wishing to act on it, the user may use his or her mobile device (114) to obtain information from the tag (404). At a first stage (302), the mobile device (114) of the user obtains information from the tag. The information obtained from the tag may include an account identifier of the recipient, a supplemental information flag indicating that supplemental information of the user is requested by the recipient, optionally an amount, and optionally additional information. Obtaining the information from the tag may include scanning a graphical code or receiving the information from a radio frequency or near sound communication beacon.

The mobile device (114) may then, at a following stage (304), detect that the information includes a supplemental information flag indicating that supplemental information of the user is requested by the recipient. The supplemental information flag indicates that one or more of a shipping address, an email address, and a phone number of the user is requested by the recipient.

At a next stage (306), the mobile device (114) prompts the user for permission to share the requested supplemental information with the recipient. This stage (306) may include displaying the supplemental information which will be shared with the recipient to the user. In some embodiments, the stage (306) of prompting the user for permission to share supplemental information includes providing the user with an option to edit the supplemental information which will be shared with the recipient and/or with an option to select supplemental information of a contact of the user which will be shared with the recipient. The prompt may, for example, allow the user to select a contact from an address book stored in the mobile device (114), where the user is purchasing a gift for the contact.

The user may decide that the requested supplemental information may be shared with the recipient or alternatively that he or she does not wish for the requested supplemental information to be shared with the recipient. The mobile device (114) may then receive the user's approval or denial in respect of sharing the requested supplemental information with the recipient in a following stage (308). This stage (308) may include receiving edits to the supplemental information made by the user and/or supplemental information of a contact other than the user. In some embodiments, the user may also input an amount (for example where the user is making a donation to the recipient) while in other embodiments the amount is included in the information obtained from the tag.

At a next stage (310), the mobile device (114) generates a transaction message including the amount associated with the transfer of funds, the account identifier of the recipient, a permission indication indicating the user's approval or denial in respect of sharing the requested supplemental information with the recipient and optionally additional information. In some embodiments, the step (310) of generating the transaction message may include a step of retrieving the requested supplemental information for inclusion with the permission indication in the transaction message. In other embodiments this step is performed by the authorization server.

At a following stage (312), the mobile device (114) transmits the transaction message to the authorization server (110) associated with the user for processing the transaction and conditional forwarding (depending on the permission indication included in the message) of the requested supplemental information to the recipient.

The authorization server (110) then receives the transaction message at a following stage (314). The transaction message may include the amount associated with the transfer of funds, the account identifier of the recipient, a permission indication indicating the user's approval or denial in respect of sharing with the recipient supplemental information requested by the recipient, and optionally additional information.

At a following stage (316), the authorization server (110) identifies a financial account and/or a data record associated with the user, for example using the account identifier of the user included in the transaction message. This stage (316) may include debiting the financial account of the user with the amount associated with the transfer of funds.

The authorization server (110) may then, at a following stage (318), evaluate the permission indication included in the transaction message to determine whether the user has granted or denied permission to the authorization server (110) to share the requested supplemental information with the recipient.

If (320) the permission indication indicates that the requested supplemental information may be shared with the recipient, the authorization server (110) may retrieve the requested supplemental information from the data record associated with the user at a next stage (322). In other embodiments, the permission indication may include the requested supplemental information. At a next stage (324), the authorization server (110) may then generate a transaction request message including the amount, the account identifier of the recipient, the requested supplemental information and optionally additional information. The transaction request message generated by the authorization server may be an OCT request message.

Alternatively, if (320) the permission indication indicates that the requested supplemental information may not be shared with the recipient, the authorization server (110) may generate a transaction request message including the amount, the account identifier of the recipient and optionally additional information at an alternative stage (326). In other cases, where the requested supplemental information may not be shared with the recipient, the transaction may fail and messages to that effect may be transmitted.

At a following stage (328), the authorization server (110) transmits the transaction request message for receipt by the transport computer (120) associated with the recipient. Transmitting the transaction request message may transmit the message via the processing network.

The transport computer (120) may then receive the transaction request message at a following stage (330).

The transport computer (120) may then, at a further stage (332), extract the amount associated with the transfer of funds, the account identifier of the recipient and the supplemental information (if any) from the transaction request message.

At a next stage (334), the transport computer (120) may identify the financial account of the recipient associated with the recipient account identifier and credit the financial account with the amount.

The transport computer (120) may then generate and transmit a transaction response message to the authorization server (110) either confirming or denying the transaction at a following stage (336). The transaction response message may be an OCT response message.

The transport computer (120) may also transmit a confirmation or denial message to the mobile device of the recipient either confirming or denying the transaction at a next stage (338). The payment confirmation message may include the amount in respect of the transfer of funds as well as the supplemental information which was requested by the recipient.

Having received the payment confirmation message together with the supplemental information of the user, the recipient may cause the product purchased by the recipient to be shipped; may send an email to the user thanking the user for his or her donation or the like.

The authorization server (110) may receive the transaction response message at a following stage (340) and may then transmit a payment confirmation or denial message to the mobile device of the user either confirming or denying the transaction.

The embodiments described herein thus enable supplemental information of a user to be transmitted together with payment information (e.g. an account identifier of a recipient and an amount in respect of the transfer of funds) to be sent together in a single message. The supplemental information and payment information may thus be received from a single source as opposed to disparate sources as may previously have been the case. Furthermore, embodiments described herein provide for payment information and supplemental information of the user to be transmitted over an interoperable processing network. Embodiments described herein provide a system and method in which push payment transaction messages are transmitted over an interoperable processing network and include both payment information and supplemental information of the user which may be used by the recipient.

The system and method described herein may be advantageous in that receiving information by recipients (such as recipients) from disparate sources is obviated. This may reduce the time and processing required at the recipient to tie related pieces of information together (e.g. a payment confirmation received from a bank and address information received directly from the user).

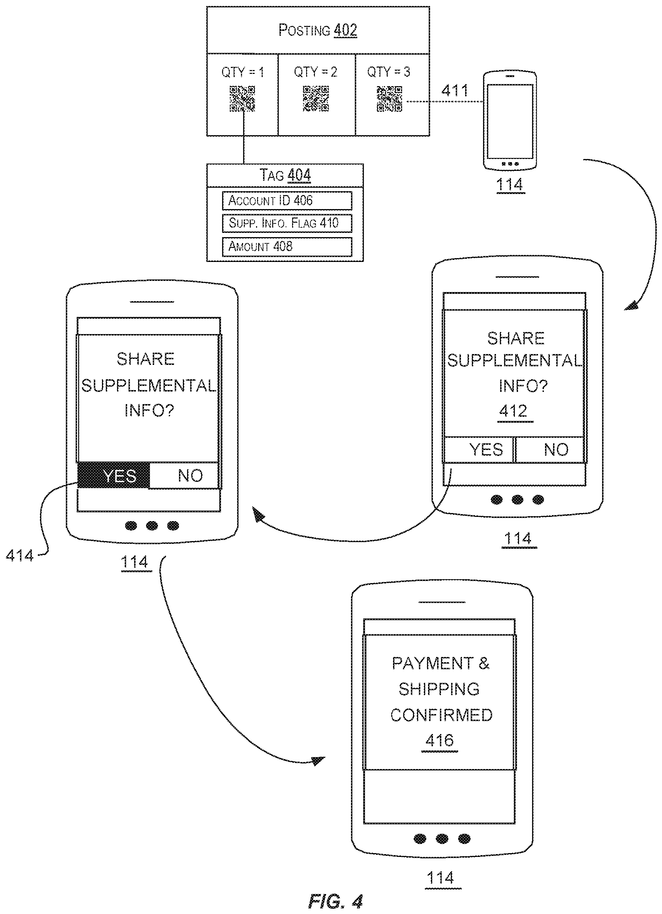

Figure 4 is a schematic diagram which illustrates an exemplary scenario of the described system and method in use from the perspective of a user. The user may notice an posting (402) advertising a product for sale by a recipient. The posting (402) includes a tag (404). The tag (404) may include an account identifier of the recipient (406), an amount associated with the price of the product (408), a supplemental information flag (410) indicating that the recipient requests supplemental information of the user, an identifier of an item or service to be purchased, and/or any other suitable information to complete a transaction. In some embodiments, the tag (404) may comprise a machine readable code embedded with at least the information described. The user uses his or her mobile device (114) to obtain (411) the account identifier (406), amount (408) and a supplemental information flag (410) from the tag (404). In some embodiments, a specific mobile application may need to be executed on the mobile device 114 in order to access the described functionality described in this disclosure. Responsive to detecting the supplemental information flag (410), the mobile device (114) prompts (412) the user for permission to share the user's supplemental information with the recipient. The prompt may display the relevant supplemental information which will be shared. The user inputs (414) his or her approval indicating that the supplemental information may be shared with recipient and causes the mobile device (114) to transmit a transaction message including a permission indication indicating the user's approval in respect of sharing the supplemental information requested by the recipient with the recipient as well as the amount and the account identifier of the recipient. The user then receives a transaction confirmation message (416) confirming the transaction and indicating that the product will be shipped to the user's shipping address.

In some embodiments, the tag may include a request for user input. For example, a user may be asked to provide a quantity value for an item that he or she would like to purchase. In some embodiments, the user may be provided with separate tags for a number of different input values. Each of these tags may include a different item identifier to differentiate the input value for the item. For example, instead of requiring a user to provide a quantity of the item, the posting may include multiple tags 404 and the user may scan the tag associated with a quantity of the item that he or she wishes to purchase. In some embodiments, the user may be required to scan the same tag 404 a number of times corresponding to the quantity that he or she desires.

In some embodiments, the tag 404 may comprise an indication of an item identifier, an account identifier 406, a base amount 408 and a supplemental information flag 410. The user of the mobile device may be made aware of any applicable prices on the posting 402. In some embodiments, the supplemental information provided to the authorization server may be used to calculate or adjust a price of the item. For example, the user's address may be used to calculate applicable sales tax on the item, which may be added to the amount 408. In some embodiments, prices of items may be updated depending on the location at which the transaction is conducted. For example, the tag 404 may include a location identifier that is used to calculate applicable sales tax. In another example, a location of the mobile device may be provided to the authorization server.

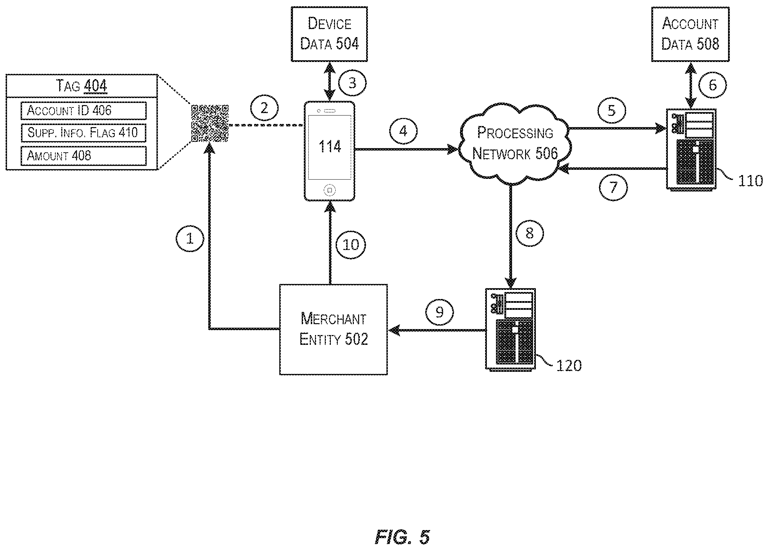

Figure 5 illustrates an example process flow that may be implemented in accordance with some embodiments of the disclosure. To begin, a recipient entity 502 may generate a tag 404. As described with respect to FIG. 4 of the specification above, the tag 404 may comprise a machine readable code that is embedded with numerous data. Within that data, the tag 404 may include an account identifier 406 associated with the recipient and a supplemental information flag 410 indicative of additional information needed by the recipient 502. In addition, the tag 404 may include an amount 408 of a potential transaction to be conducted. In some embodiments, the data embedded in the tag 404 may be formatted as a string of characters with separator characters. By way of illustration, an example string may be formatted to include "<account_id>1234567890</account_id><amount>$10.00</amount><sup_info><mobile nu m>integer</mobile_num><email>string</email></sup_info>." In this example, the account identifier 406 is 1234567890, the amount 408 is $10.00, and the recipient has requested a mobile device number (formatted as an integer) and an email address (formatted as a string).

Upon generation of the tag 404 by the recipient entity 502, the recipient entity 502 may provide the tag 404 on a posting (e.g., on an advertisement) at step 1. Information from the tag 404 may be obtained using a mobile device 114 at step 2. For example, a camera on the mobile device may identify and interpret the machine readable code of the tag 404.

In some embodiments, at least a portion of the supplemental information requested in the tag 404 may include data specific to, or stored on, the mobile device that may be determined from device data 504 at step 3. For example, the supplemental information requested may include a current geographic location of the mobile device. In this example, the mobile device 114 may query information provided by its global positioning system (GPS) to populate the requested supplemental information. In another example, at least a portion of supplemental information requested via the tag may be stored on, and accessed by, the mobile device. For example, the mobile device may, upon receiving an indication that shipping information is needed via the tag, identify shipping information stored on the mobile device to be transmitted with the tag information. In some embodiments, at least some supplemental information requested via the supplemental information flag may require user input. For example, the tag may include instructions to prompt the user to select from a number of available options. In this example, the user's selection may be transmitted with the tag information.

The mobile device may then identify an access credential to be used in the transaction. For example, a particular access credential may be stored in association with an application used to obtain the tag 404. In this example, the access credential stored in association with the application may be used to conduct the transaction. In another example, a user may be asked to provide an access credential or select from a list of access credentials (e.g., a list of previously used access credentials). The mobile device may then generate a transaction request based on the tag 404 and the access credential.

At step 4, the transaction request may be transmitted to a processing network 506. Processing network 506 may be an example processing network 130 of FIG. 1. The processing network may identify an appropriate authorization server 110 to which the transaction request is to be sent based on the access credential in the transaction request. For example, the processing network 506 may be configured to route each received transaction request to an issuer associated with the access credential in the transaction request.

At step 5, the transaction request may be provided to an authorization server 110. Authorization server 110 may be an example authorization server 1 10 as depicted in FIG. 1 and 2. The authorization server 110 may be configured to determine whether the transaction indicated in the transaction request is authorized. The authorization server 110 may subsequently generate a transaction response indicating whether the transaction is authorized.

At step 6, the authorization server 110 may determine values for each of requested supplemental information received in the transaction request. To do this, the authorization server 110 may query account data 508 associated with the access credential used to initiate the transaction. For example, the authorization server may query various attributes associated with the supplemental information to be provided. In some embodiments, the supplemental information populated by the mobile device 114 may be provided separate from the supplemental information to be populated by the authorization server 110. The authorization server 110 may be configured to normalize information from the transaction request in order to correctly identify data fields within the account data 508 that correspond to the requested supplemental information. In some embodiments, the authorization response generated by the authorization server 110 may be modified to include the determined values. For example, upon determining values for each of the requested supplemental information, the authorization server 110 may append those values to the authorization response.

At step 7, the authorization response may be provided to the processing network 506. The processing network 506 may be configured to identify an appropriate transport computer 120 to which the authorization response is to be routed. In some embodiments, the transport computer 120 may be identified based on the account identifier 406 and/or a routing number provided in the tag 404. At step 8, the transaction response may be provided to a transport computer 120. Transport computer 120 may be an example transport computer 120 as depicted in FIG. 1 and 2. It should be noted that, in some embodiments, the transaction response may be provided directly to the transport computer 120 by the authorization server 110. The transport computer 120, upon receiving the authorization response, may initiate a settlement process with the authorization server 110.

At step 9, the transaction response, or a portion thereof, may be routed to the recipient entity 502. For example, the transport computer may notify the recipient entity 502 that a transaction has been completed as well as the amount 408 and/or a quantity of items to be provided to the user. The recipient may subsequently initiate a fulfilment process for the items, and may initiate contact with the user at step 10.

By way of illustration, consider a scenario in which a user wishes to purchase bus fare using the disclosed system. In this illustrative example, a user may approach a posting for bus fares and may scan, using a mobile device's camera, a machine readable code (i.e., a tag 404) associated with a quantity of tickets to be purchased. The machine readable code may be embedded with an account identifier (i.e., account identifier 406) for the owner/operator of the bus system (i.e., recipient entity 502), a supplemental information flag 410 that indicates a mobile number is required, and an amount 408 that indicates the fare to be purchased. In this example, the tag information is transmitted to an issuer (i.e., an authorization server) 110 associated with an access credential to be used to complete the transaction. Upon receiving this information, the issuer may authorize the transaction in the amount 408 indicated to be paid to the account of the bus owner/operator and may identify and transmit the user's mobile number to the transport computer that maintains the account, and subsequently to the bus owner/operator. The bus owner/operator may then generate ticketing information for the user to be transmitted to the mobile device at the received mobile number. For example, the bus owner/operator may generate a short message service (SMS) message that includes the ticket information to be used as proof of payment during fare collection and transmit the SMS message to the mobile device. In this way, the user may be provided with an electronic ticket to be displayed on his or her mobile device. It should be noted that, in some embodiments, such as the one described her, the user may not be asked for his or her permission to provide the supplemental information.

By way of a second illustrative example, a user may attend an event, and may see a poster advertising commemorative t-shirts for the event. In this example, the user may scan a barcode on the poster to make a purchase of a t-shirt. In this example, the supplemental information flag may indicate that the user is to select a size of the t-shirt, which may cause the mobile device to display S, M, L, and XL. The user may select one of the displayed options, which may subsequently be appended to the supplemental information flag to be provided to the recipient. Additionally, the supplemental information flag may indicate that the user's shipping address is needed. Upon receiving this indication, the mobile device may identify the user's shipping information stored within the memory of the mobile device. The identified shipping information may then be appended to the supplemental information flag to be provided to the recipient. In this example, the supplemental information may be provided to the recipient independent of an authorization request or it may be transmitted to the authorization server and subsequently to the transport computer.

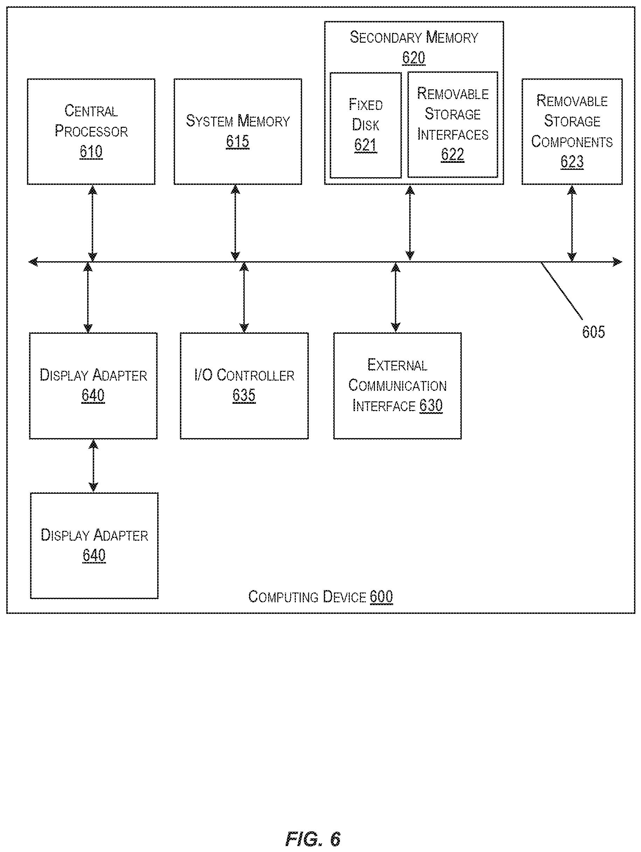

Figure 6 illustrates an example of a computing device (600) in which various aspects of the disclosure may be implemented. The computing device (600) may be suitable for storing and executing computer program code. The various participants and elements in the previously described system diagrams may use any suitable number of subsystems or components of the computing device (600) to facilitate the functions described herein.

The computing device (600) may include subsystems or components interconnected via a communication infrastructure (605) (for example, a communications bus, a cross-over bar device, or a network). The computing device (600) may include at least one central processor (610) and at least one memory component in the form of computer-readable media.

The memory components may include system memory (615), which may include read only memory (ROM) and random access memory (RAM). A basic input/output system (BIOS) may be stored in ROM. System software may be stored in the system memory (615) including operating system software.

The memory components may also include secondary memory (620). The secondary memory (620) may include a fixed disk (621), such as a hard disk drive, and, optionally, one or more removable-storage interfaces (622) for removable-storage components (623).

The removable-storage interfaces (622) may be in the form of removable-storage drives (for example, magnetic tape drives, optical disk drives, floppy disk drives, etc.) for corresponding removable storage-components (for example, a magnetic tape, an optical disk, a floppy disk, etc.), which may be written to and read by the removable-storage drive.

The removable-storage interfaces (622) may also be in the form of ports or sockets for interfacing with other forms of removable-storage components (623) such as a flash memory drive, external hard drive, or removable memory chip, etc.

The computing device (600) may include an external communications interface (630) for operation of the computing device (600) in a networked environment enabling transfer of data between multiple computing devices (600). Data transferred via the external communications interface (630) may be in the form of signals, which may be electronic, electromagnetic, optical, radio, or other types of signal.

The external communications interface (630) may enable communication of data between the computing device (600) and other computing devices including servers and external storage facilities. Web services may be accessible by the computing device (600) via the communications interface (630).

The external communications interface (630) may also enable other forms of communication to and from the computing device (600) including, voice communication, near field communication, Bluetooth^{™}, etc.

The computer-readable media in the form of the various memory components may provide storage of computer-executable instructions, data structures, program modules, and other data. A computer program product may be provided by a computer-readable medium having stored computer-readable program code executable by the central processor (610). A computer program product may be provided by a non-transient computer-readable medium, or may be provided via a signal or other transient means via the communications interface (630).

Interconnection via the communication infrastructure (605) allows a central processor (610) to communicate with each subsystem or component and to control the execution of instructions from the memory components, as well as the exchange of information between subsystems or components.

Peripherals (such as printers, scanners, cameras, or the like) and input/output (I/O) devices (such as a mouse, touchpad, keyboard, microphone, joystick, or the like) may couple to the computing device (600) either directly or via an I/O controller (635). These components may be connected to the computing device (600) by any number of means known in the art, such as a serial port. One or more monitors (645) may be coupled via a display or video adapter (640) to the computing device (600).

Figure 7 shows a block diagram of a mobile device (700) that may be used in embodiments of the disclosure. The mobile device (700) may be a cell phone, a feature phone, a smart phone, a satellite phone, or a computing device having a phone capability.

The mobile device (700) may include a processor (705) (e.g., a microprocessor) for processing the functions of the mobile device (700) and a display (720) to allow a user to see the phone numbers and other information and messages. The mobile device (700) may further include an input element (725) to allow a user to input information into the device (e.g., input buttons, touch screen, etc.), a speaker (730) to allow the user to hear voice communication, music, etc., and a microphone (735) to allow the user to transmit his or her voice through the mobile device (700).

The processor (705) of the mobile device (700) may connect to a memory (715). The memory (715) may be in the form of a computer-readable medium that stores data and, optionally, computer-executable instructions.

The mobile device (700) may also include a communication element (740) for connection to communication channels (e.g., a cellular telephone network, data transmission network, Wi-Fi^{™} network, satellite-phone network, Internet network, Satellite Internet Network, etc.). The communication element (740) may include an associated wireless transfer element, such as an antenna.

The communication element (740) may include a subscriber identity module (SIM) in the form of an integrated circuit that stores an international mobile subscriber identity and the related key used to identify and authenticate a subscriber using the mobile device (700). One or more subscriber identity modules may be removable from the mobile device (700) or embedded in the mobile device (700).

The mobile device (700) may further include a contactless element (750), which is typically implemented in the form of a semiconductor chip (or other data storage element) with an associated wireless transfer element, such as an antenna. The contactless element (750) may be associated with (e.g., embedded within) the mobile device (700) and data or control instructions transmitted via a cellular network may be applied to the contactless element (750) by means of a contactless element interface (not shown). The contactless element interface may function to permit the exchange of data and/or control instructions between mobile device circuitry (and hence the cellular network) and the contactless element (750).

The contactless element (750) may be capable of transferring and receiving data using a near field communications (NFC) capability (or near field communications medium) typically in accordance with a standardized protocol or data transfer mechanism (e.g., ISO 14443/NFC). Near field communications capability is a short-range communications capability, such as radio-frequency identification (RFID), Bluetooth^{™}, infra-red, or other data transfer capability that can be used to exchange data between the mobile device (700) and an interrogation device. Thus, the mobile device (700) may be capable of communicating and transferring data and/or control instructions via both a cellular network and near field communications capability.

The data stored in the memory (715) may include: operation data relating to the operation of the mobile device (700), supplemental data (e.g., name, date of birth, identification number, etc.), financial data (e.g., bank account information, a bank identification number (BIN), credit or debit card number information, account balance information, expiration date, loyalty provider account numbers, etc.), transit information (e.g., as in a subway or train pass), access information (e.g., as in access badges), etc. A user may transmit this data from the mobile device (700) to selected receivers.

The mobile device (700) may be, amongst other things, a notification device that can receive alert messages and access reports, a portable recipient device that can be used to transmit control data identifying a discount to be applied, as well as a portable consumer device that can be used to make payments.

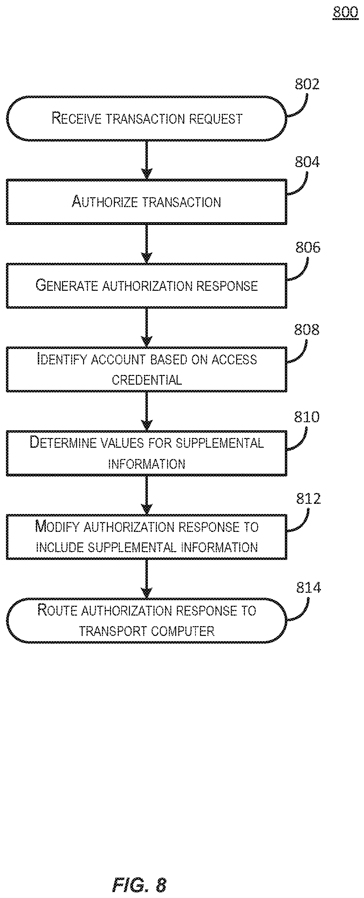

FIG. 8 depicts an example flow diagram for providing supplemental data for a transaction in accordance with embodiments of the disclosure. Some or all of the process 800 (or any other processes described herein, or variations and/or combinations thereof) may be performed under the control of one or more computer systems configured with executable instructions and may be implemented as code (e.g., executable instructions, one or more computer programs or one or more applications). In accordance with at least some embodiments, the process 800 outlined in FIG. 8 may be performed by an authorization server, such as authorization server 110 depicted in FIG. 1 and 2. The code may be stored on a computer-readable storage medium, for example, in the form of a computer program including a plurality of instructions executable by one or more processors. The computer-readable storage medium may be non-transitory.

In some embodiments, process 800 may begin at 802, when a transaction request is received from a mobile device (e.g., via a processing network). In some embodiments, the transaction request may be generated by a mobile application installed on, and executed from, a mobile device. In some embodiments, the mobile application may cause the mobile device to generate a transaction request upon detecting that the user has interacted with a tag. For example, in some embodiments, the user may scan a tag that comprises a machine readable code using a mobile device's camera. In this example, the transaction request may be generated to include information obtained by the mobile device from the machine readable code. In another example, the mobile device may display a prompt to the user upon detecting a tag provided via a wireless transmission (e.g., via a radio frequency beacon, a near sound communication beacon, or another suitable transmission means). Once the transaction request has been generated by the mobile device, it may be transmitted to the authorization server.

At 804, the transaction indicated in the transaction request may be authorized. An authorization server may determine whether to authorize or decline the transaction based on any number of factors associated with the transaction. For example, the authorization server may determine whether an account associated with the transaction request has sufficient funds and/or credit. In some embodiments, the authorization server may assess a likelihood that the transaction request is fraudulent, and may approve or decline the transaction based on that assessment. Once the transaction request has been approved or declined, an authorization response message may be generated at 806.

At 810, a number of values may be identified that correspond to data fields of supplemental information requested via the transaction request. The authorization server may identify a number of data fields in the transaction request that are requested via a supplemental information flag. In some embodiments, the authorization server may normalize or map these data fields to data fields existing in its database. Once the authorization server has identified each of the requested data fields, it may determine values associated with each of those data fields. In some embodiments, this may be done by querying account information associated with the transaction request for each of the data fields. In some embodiments, the authorization server may determine if the requesting entity (e.g., a recipient) has authority to view the requested information. For example, the authorization server may assign varying security levels to each data field and may determine what entities may be provided with which. By way of further example, the authorization server may determine that the requesting entity may an email address, but may not receive a social security number. The authorization server may store and maintain configuration settings that indicate data fields that may be provided to various entities. In this way, the authorization server may be configured to prevent unauthorized dissemination of sensitive information. In some embodiments, the authorization server may provide only the requested information that the requesting entity has the authority to receive. In some embodiments, the authorization server may decline the transaction request upon determining that the requesting entity has requested information that it does not have the authority to

At 812, the authorization response message may be modified to include the identified values. In some embodiments, the authorization server may be configured to include the requested supplemental information within the authorization response message upon generating the authorization response message. In some embodiments, the authorization response message may be generated and, upon determining that the transaction has been approved, may be subsequently modified to include the requested information. For example, determined values for the requested supplemental information may be appended to the authorization response message in a predetermined format.

At 814, the authorization response message may be routed to an appropriate transport computer. In some embodiments, the authorization response message may be provided to a processing network to be routed to the appropriate transport computer. The account identifier in the transaction request received by the authorization server may include routing information (e.g., a routing number) associated with a particular transport computer or set of transport computers.

Embodiments, of the disclosure provide for a number of technical advantages. For example, the system enables a user to conduct a transaction by obtaining tag information (e.g., by snapping a picture or scanning a machine readable code). This vastly minimizes the amount of effort needed by a user. For example, the user need not provide any contact information that he or she normally would in a transaction. Furthermore, the system enables a recipient entity to become a "passive" party to a transaction. In other words, the recipient need not seek approval for each transaction, as the recipient will only receive approved transactions. This results in lower risk to the recipient by reducing and/or eliminating potential charge backs by an authorization server.

Furthermore, in some embodiments, the system heightens security of mobile device transactions. For example, unauthorized parties most commonly gain access to a user's sensitive information through interception of wireless signals. In the disclosed system, a user need not provide any sensitive information over his or her wireless connection that may be intercepted by an unauthorized party. Instead, sensitive information is retrieved at the authorization server and sent over a secure network (e.g., the processing network) to the transport computer. This prevents interception by unauthorized parties as sensitive information is only transmitted via secure connections.

The foregoing description of the embodiments of the invention has been presented for the purpose of illustration; it is not intended to be exhaustive or to limit the invention to the precise forms disclosed. Persons skilled in the relevant art can appreciate that many modifications and variations are possible in light of the above disclosure.

Some portions of this description describe the embodiments of the invention in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. The described operations may be embodied in software, firmware, hardware, or any combinations thereof.

It should be appreciated that components or modules described herein may have the required configuration and/or arrangement of hardware, software, firmware or the like for performing their associated functions, steps, processes and/or operations. The software components or functions described in this application may be implemented as software code to be executed by one or more processors using any suitable computer language such as, for example, Java^{™}, C++, or Perl^{™} using, for example, conventional or object-oriented techniques. The software code may be stored as a series of instructions, or commands on a non-transitory computer-readable medium, such as a random access memory (RAM), a read-only memory (ROM), a magnetic medium such as a hard-drive or a floppy disk, or an optical medium such as a CD-ROM. Any such computer-readable medium may also reside on or within a single computational apparatus, and may be present on or within different computational apparatuses within a system or network.

Any of the steps, operations, or processes described herein may be performed or implemented with one or more hardware or software modules, alone or in combination with other devices. In one embodiment, a software module is implemented with a computer program product comprising a non-transient computer-readable medium containing computer program code, which can be executed by a computer processor for performing any or all of the steps, operations, or processes described.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

Throughout the specification and claims unless the contents requires otherwise the word "comprise" or variations such as 'comprises' or "comprising" will be understood to imply the inclusion of a stated integer or group of integers but not the exclusion of any other integer or group of integers.

## Claims

1. A method of providing supplemental content to a recipient of a transaction comprising:
receiving, by an authorization server (110) and from an application (203) provided by a financial institution or processing payment network and resident on a mobile device (114), an access credential, and an indication of supplemental information or supplemental information values for the supplemental information, wherein the supplemental information includes at least one of a shipping address, email address, or mobile phone number, the access credential is stored in association with the application, the indication of the supplemental information is obtained by the mobile device upon scanning a machine-readable code (404) from a posting (402), and the indication of the supplemental information comprises a supplemental information flag encoded in the machine-readable code indicating the supplemental information requested by the recipient;
determining, by the authorization server, whether the transaction is authorized based on the access credential; **characterized in that**:
identifying, by the authorization server, supplemental information values for the indicated supplemental information for which supplemental information values have not been received;
upon determining that the transaction is authorized, generating, by the authorization server, an authorization response that includes the identified supplemental information values; and
transmitting, by the authorization server, the generated authorization response to the recipient, such that the supplemental information values for the indicated supplemental information are used by the recipient to contact a user of the mobile device.

2. The method of claim 1, wherein identifying values for the indicated supplemental information comprises:
determining an account associated with the access credential; and
identifying values associated with the determined account.

3. The method of any preceding claim, wherein generating an authorization response that includes the identified values further comprises
modifying the authorization response to include the identified values.

4. The method of any preceding claim, wherein a number of data fields of the indication of supplemental information is obtained by the mobile device from a tag presented by the recipient.

5. The method of claim 4, wherein the tag presented by the recipient includes the supplemental information flag.

6. The method of any preceding claim, wherein the method further comprises receiving, by the authorization server and from the mobile device, a permission indication that indicates approval to provide the supplemental information to the recipient.

7. The method of claim 6, wherein an unmodified transaction response is transmitted to the recipient if the permission indication indicates that approval is not granted.

8. The method of any preceding claim, wherein an account identifier that includes routing information is received by the authorization server and from the mobile device, and the method further comprises: routing the authorization response to a transport computer (120) associated with the routing information via a processing network.

9. An authorization server (110) comprising:
one or more processors; and
a memory including instructions that, when executed by the one or more processors, cause the authorization server to perform the method according to any preceding claim.

10. The authorization server of claim 9, wherein the machine-readable code is a tag of the recipient, wherein the tag comprises at least one of a radio frequency beacon, a near sound communication beacon, or a graphical code.

11. The authorization server of claim 9 or 10, wherein the instructions further cause the server apparatus to receive a permission indication from the mobile device, the permission indication being received upon the mobile device receiving a response to a prompt to provide permission.

12. The authorization server of claim 11, wherein the prompt to provide permission includes an option to edit the indication of supplemental information.

13. The authorization server of claim 11, wherein the prompt to provide permission includes a selection of supplemental information to be included in the indication of supplemental information.

## Patentansprüche

1. Verfahren zum Bereitstellen von zusätzlichen Inhalten für einen Empfänger einer Transaktion, umfassend:
Empfangen, durch einen Autorisierungsserver (110) und von einer Anwendung (203), die von einem Finanzinstitut oder einem verarbeitenden Zahlungsnetzwerk bereitgestellt wird und auf einem Mobilgerät (114) resident ist, eines Zugriffsberechtigungsnachweises und einer Angabe von Zusatzinformationen oder Zusatzinformationswerten für die Zusatzinformationen, wobei die Zusatzinformationen mindestens eine Versandadresse, E-Mail-Adresse oder Mobiltelefonnummer beinhalten, wobei der Zugriffsberechtigungsnachweis in Verbindung mit der Anwendung gespeichert wird, die Angabe der Zusatzinformationen durch das Mobilgerät beim Scannen eines maschinenlesbaren Codes (404) von einer Buchung (402) erhalten wird, und die Angabe der Zusatzinformationen ein Zusatzinformationsflag umfasst, das in dem maschinenlesbaren Code kodiert ist, der die von dem Empfänger angeforderten Zusatzinformationen angibt;
Bestimmen, durch den Autorisierungsserver, ob die Transaktion basierend auf dem Zugriffsberechtigungsnachweis autorisiert ist; **gekennzeichnet durch** das:
Identifizieren, durch den Autorisierungsserver, von Zusatzinformationswerten für die angegebenen Zusatzinformationen, für die keine Zusatzinformationswerte empfangen wurden;
nach dem Bestimmen, dass die Transaktion autorisiert ist, Erzeugen, durch den Autorisierungsserver, einer Autorisierungsantwort, die die identifizierten Zusatzinformationswerte beinhaltet; und
Übertragen, durch den Autorisierungsserver, der erzeugten Autorisierungsantwort an den Empfänger, sodass die Zusatzinformationswerte für die angegebenen Zusatzinformationen durch den Empfänger verwendet werden, um einen Benutzer des mobilen Geräts zu kontaktieren.

2. Verfahren nach Anspruch 1, wobei das Identifizieren von Werten für die angegebenen Zusatzinformationen Folgendes umfasst:
Bestimmen eines Kontos, das mit dem Zugriffsberechtigungsnachweis verbunden ist; und
Identifizieren von Werten, die mit dem bestimmten Konto verbunden sind.

3. Verfahren nach einem der vorhergehenden Ansprüche, wobei das Erzeugen einer Autorisierungsantwort, die die identifizierten Werte enthält, ferner das Modifizieren der Autorisierungsantwort umfasst, um die identifizierten Werte zu enthalten.

4. Verfahren nach einem der vorhergehenden Ansprüche, wobei eine Anzahl von Datenfeldern der Angabe von Zusatzinformationen von dem mobilen Gerät von einem Tag erhalten wird, das von dem Empfänger präsentiert wird.

5. Verfahren nach Anspruch 4, wobei das durch den Empfänger präsentierte Tag das Zusatzinformationsflag enthält.

6. Verfahren nach einem der vorhergehenden Ansprüche, wobei das Verfahren ferner das Empfangen einer Berechtigungsangabe durch den Autorisierungsserver und von dem mobilen Gerät umfasst, die die Genehmigung angibt, die Zusatzinformationen dem Empfänger bereitzustellen.

7. Verfahren nach Anspruch 6, wobei eine nicht modifizierte Transaktionsantwort an den Empfänger übertragen wird, wenn die Berechtigungsangabe angibt, dass die Genehmigung nicht gewährt wird.

8. Verfahren nach einem der vorhergehenden Ansprüche, wobei eine Kontokennung, die Routing-Information enthält, von dem Autorisierungsserver und von dem mobilen Gerät empfangen wird, und das Verfahren ferner umfasst: Routen der Autorisierungsantwort zu einem Transportcomputer (120), der mit der Routing-Information verbunden ist, über ein Verarbeitungsnetzwerk.

9. Autorisierungsserver (110), umfassend:
einen oder mehrere Prozessoren; und
einen Speicher, der Anweisungen enthält, die bei Ausführung durch den einen oder die mehreren Prozessoren den Autorisierungsserver veranlassen, ein Verfahren nach einem der vorhergehenden Ansprüche durchzuführen.

10. Autorisierungsserver nach Anspruch 9, wobei der maschinenlesbare Code ein Tag des Empfängers ist, wobei das Tag mindestens eines von einer Hochfrequenzbake, einer akustischen Schallkommunikationsbake oder einem graphischen Code umfasst.

11. Autorisierungsserver nach Anspruch 9 oder 10, wobei die Anweisungen ferner veranlassen, dass die Servervorrichtung eine Berechtigungsangabe von dem mobilen Gerät empfängt, wobei die Berechtigungsangabe empfangen wird, wenn das mobile Gerät eine Antwort auf eine Aufforderung zum Bereitstellen einer Genehmigung empfängt.

12. Autorisierungsserver nach Anspruch 11, wobei die Aufforderung zum Bereitstellen einer Genehmigung eine Option zum Editieren der Angabe von Zusatzinformationen enthält.

13. Autorisierungsserver nach Anspruch 11, wobei die Aufforderung zum Bereitstellen einer Genehmigung eine Auswahl von Zusatzinformationen enthält, die in der Angabe von Zusatzinformationen enthalten sind.

## Revendications

1. Procédé de fourniture d'un contenu supplémentaire à un destinataire d'une transaction comprenant :
la réception, par un serveur d'autorisation (110) et en provenance d'une application (203) fournie par une institution financière ou un réseau de traitement de paiements et résidant sur un dispositif mobile (114), d'un authentifiant d'accès, et d'une indication d'informations supplémentaires ou de valeurs d'informations supplémentaires pour les informations supplémentaires, dans lequel les informations supplémentaires comportent au moins une adresse d'expédition, une adresse électronique, ou un numéro de téléphone mobile, l'authentifiant d'accès est stocké en association avec l'application, l'indication des informations supplémentaires est obtenue par le dispositif mobile lors du balayage d'un code lisible par machine (404) à partir d'un article (402), et l'indication des informations supplémentaires comprend un drapeau d'informations supplémentaires codé dans le code lisible par machine indiquant les informations supplémentaires demandées par le destinataire ;
le fait que le serveur d'autorisation détermine si la transaction est autorisée sur la base de l'authentifiant d'accès ; **caractérisé en ce que** :
l'identification, par le serveur d'autorisation, de valeurs d'informations supplémentaires pour les informations supplémentaires indiquées pour lesquelles des valeurs d'informations supplémentaires n'ont pas été reçues ;
lors de la détermination du fait que la transaction est autorisée, la génération, par le serveur d'autorisation, d'une réponse d'autorisation qui comporte les valeurs d'informations supplémentaires identifiées ; et
la transmission, par le serveur d'autorisation, de la réponse d'autorisation générée au destinataire, de sorte que les valeurs d'informations supplémentaires pour les informations supplémentaires indiquées sont utilisées par le destinataire pour contacter un utilisateur du dispositif mobile.

2. Procédé selon la revendication 1, dans lequel l'identification des valeurs pour les informations supplémentaires indiquées comprend :
la détermination d'un compte associé à l'authentifiant d'accès ; et
l'identification de valeurs associées au compte déterminé.

3. Procédé selon l'une quelconque des revendications précédentes, dans lequel la génération d'une réponse d'autorisation qui comporte les valeurs identifiées comprend en outre la modification de la réponse d'autorisation pour inclure les valeurs identifiées.

4. Procédé selon l'une quelconque des revendications précédentes, dans lequel un certain nombre de champs de données de l'indication d'informations supplémentaires est obtenu par le dispositif mobile à partir d'une étiquette présentée par le destinataire.

5. Procédé selon la revendication 4, dans lequel l'étiquette présentée par le destinataire comporte le drapeau d'informations supplémentaires.

6. Procédé selon l'une quelconque des revendications précédentes, dans lequel le procédé comprend en outre la réception, par le serveur d'autorisation et en provenance du dispositif mobile, d'une indication de permission qui indique l'approbation de fournir les informations supplémentaires au destinataire.

7. Procédé selon la revendication 6, dans lequel une réponse de transaction non modifiée est transmise au destinataire si l'indication de permission indique que l'approbation n'est pas accordée.

8. Procédé selon l'une quelconque des revendications précédentes, dans lequel un identifiant de compte qui comporte des informations d'acheminement est reçu par le serveur d'autorisation et en provenance du dispositif mobile, et le procédé comprend en outre : l'acheminement de la réponse d'autorisation vers un ordinateur de transport (120) associé aux informations d'acheminement par l'intermédiaire d'un réseau de traitement.

9. Serveur d'autorisation (110) comprenant :
un ou plusieurs processeurs ; et
une mémoire comportant des instructions qui, lorsqu'elles sont exécutées par les un ou plusieurs processeurs, amènent le serveur d'autorisation à réaliser le procédé selon l'une quelconque des revendications précédentes.

10. Serveur d'autorisation selon la revendication 9, dans lequel le code lisible par machine est une étiquette du destinataire, dans lequel l'étiquette comprend au moins une balise radiofréquence, une balise de communication de son proche, ou un code graphique.

11. Serveur d'autorisation selon la revendication 9 ou 10, dans lequel les instructions amènent en outre l'appareil serveur à recevoir une indication de permission provenant du dispositif mobile, l'indication de permission étant reçue lorsque le dispositif mobile reçoit une réponse à une invite demandant à fournir une permission.

12. Serveur d'autorisation selon la revendication 11, dans lequel l'invite demande à fournir une permission comprend une option pour éditer l'indication d'informations supplémentaires.

13. Serveur d'autorisation selon la revendication 11, dans lequel l'invite demandant à fournir une permission comporte une sélection d'informations supplémentaires à inclure dans l'indication d'informations supplémentaires.
